# EUROPÄISCHE PATENTSCHRIFT

(11) **EP 1 496 325 B1**
(45) Veröffentlichungstag und Bekanntmachung des Hinweises auf die Patenterteilung: **09.11.2016**
(21) Anmeldenummer: 04016209.1
(22) Anmeldetag: 09.07.2004
(51) Int. Cl.: F27B 5/02, C04B 35/64

(54) **Verfahren zum kombinierten Entbinden und Sintern von glaskeramischen, keramischen und metallischen Formteilen**
Process for combined debinding and sintering of glass-ceramic, ceramic and metallic shaped articles
Procédé d'élimination du liant et de frittage de pièces vitrocéramiques, céramiques et métalliques

(30) Priorität: 10.07.2003 DE 10332071
(43) Veröffentlichungstag der Anmeldung: 12.01.2005
(73) Patentinhaber: Blüm, Heinz-Jürgen, 07743 Jena (DE)
(72) Erfinder: Blüm, Heinz-Jürgen, 07743 Jena (DE)
(74) Vertreter: Bock, Gerhard

(56) Entgegenhaltungen:
- DE-A1- 10 066 005

## Beschreibung

Die Erfindung betrifft ein Verfahren zum kombinierten Entbindern und Sintern von insbesondere glaskeramischen, keramischen und metallischen Formteilen.

Sinter- und Entbinderungsprozesse erfordern unterschiedliche Temperaturbereiche, Ofenatmosphären und Reinheiten. Aus diesem Grund werden derzeit für jeden Prozess eigens konzipierte Ofenanlagen verwendet. Die Beheizung der Öfen erfolgt dabei häufig durch Widerstandsheizer, die je nach Atmosphäre und Temperatur aus unterschiedlichen Materialien bestehen.

Ziel des Entbinderns ist es dabei, den im Formteil (Grünling) enthaltenen meist organischen Binder zu entfernen. Dabei entsteht der sogenannte Braunling, die Grundlage für das nachfolgende Sintern. Das Entbindern erfolgt vorwiegend in oxidierender oder inerter Atmosphäre bei Temperaturen von ca. 200°C bis 600°C. Beim Entbindern kommt es häufig zu einem nicht vollständigen Abbau des Binders im Formteil und zu Binderrestablagerungen in der Isolation. Binderreste im Formteil bzw. der Isolation haben zum Beispiel einen erhöhten Kohlenstoffanteil des gesinterten Formteils zur Folge. Diese Binderreste wiederum verschlechtert die Materialeigenschaften des Fertigstückes zum Teil erheblich.

Beim Sintern wird der beim Entbindern entstandene Braunling auf Sintertemperatur, welche unterhalb der Schmelztemperatur liegt, erwärmt. Durch Diffusionsvorgänge zwischen den Teilchen kommt es zu einem Verbund und einer Verfestigung des Formteils.

Das Sintern erfolgt häufig unter Schutzgas oder reduzierender Atmosphäre. Eine reduzierende Atmosphäre wird meist zur Vermeidung und Rückbildung von Metalloxiden benötigt. Dabei werden am häufigsten wasserstoffhaltige Atmosphären eingesetzt. Die für das Sintern benötigten Temperaturen bewegen sich in der Regel oberhalb 1000°C bis ca. 2200°C.

Für Entbinderungszwecke werden entweder Öfen ohne Kontrolle der Atmosphäre oder solche mit kontrollierter Atmosphäre eingesetzt, wobei nur letzte für höher qualifizierte Verfahren verwendet werden. Man unterscheidet hier zwischen so genannten Heißwand- und Kaltwandöfen.

Bei Heißwandöfen wird die atmosphärenbestimmende Wand im Heißbereich des Ofens aufgebaut und die Beheizung und Isolation um diese Wand herum angeordnet. Beispiele für Heißwandöfen sind beispielsweise Retorten- und Muffelöfen. Vorteil dieser Anordnung ist die einfache Kontrolle der Ofenatmosphäre (wenig Restsauerstoff, geringe Verunreinigungen) und die Vermeidung von Organik-Resten im Ofenraum. Diese Öfen sind auf Grund der verwendeten Wandungsmaterialien auf eine maximale Ofentemperatur bis etwa 1.000°C begrenzt, was in der Regel Sinterprozesse ausschließt.

Bei Kaltwandöfen wird die atmosphärenbestimmende Wand außerhalb des Heißbereiches des Ofens aufgebaut, so dass Heizer und Isolation den Innenraum des Ofens bilden. Dieses Konzept ist relativ einfach und preisgünstig. Es können jedoch keine besonders reinen Atmosphären eingestellt werden. Von Nachteil ist weiterhin, dass Binderreste in der Isolation verbleiben und sowohl die Heizer als auch die Isolation den unter Umständen aggressiven Ausbrenngasen ausgesetzt sind. Kaltwandöfen, die zum Entbindern eingesetzt werden, können zwar prinzipiell höhere Temperaturen erreichen, erlauben jedoch den Betrieb unter reduzierender Atmosphäre bei höheren Temperaturen (> 1.100°C) nicht und erzeugen zudem in höheren Temperaturbereichen eine insbesondere durch Kohlenwasserstoffe verunreinigte Atmosphäre. Aus den zuvor beschriebenen Gründen werden die zu behandelnden Werkstücke zumeist nach der Entbinderung in einen separaten Sinterofen eingebracht. Sollen beim Sintervorgang reine inerte oder reduzierende Atmosphären oder Vakuum eingestellt werden, werden üblicherweise Kaltwandöfen in speziellen Ausführungen eingesetzt.

Zu diesem Zweck sind Kaltwandöfen bekannt, welche in einem vakuumdichten, gekühlten Rezipienten angeordnet sind. Die Beheizung und Isolation besteht aus hochschmelzenden Metallen (z. B. Molybdän, Wolfram) und ist als Strahlblechisolation mit vorgehängten Heizern ausgeführt. Andere Aufbauten verwenden Graphit als Heiz- und Isolierungsmaterial. Derartige Anordnungen erlauben den Betrieb bis zu höchsten Temperaturen (ca. 2.200 °C) und die Definition einer sehr reinen Atmosphäre. Derartige Öfen sind jedoch verhältnismäßig teuer und sehr empfindlich gegen Verunreinigungen. Diese Verunreinigungen werden durch Binderreste in den Bräunlingen eingetragen, da diese z. B. auf Grund der dann ungenügenden Festigkeit nicht vollständig entbindert werden können.
Bisher war es auf Grund der unterschiedlichen Betriebsanforderungen nicht möglich, Entbinderungs- und Sinterprozesse in einer einzelnen Anlage zu fahren. Hierfür waren auf Grund der unterschiedlichen Temperaturbereiche und Ofenatmosphären verschiedenartige, darauf abgestimmte und in jedem Fall voneinander getrennte Anlagen notwendig, was eine Einschränkung in der Prozessführung sowie erhöhte Kosten zur Folge hat.

Aus DE 10066005 C2 ist bekannt, dass zum Sintern von Aluminiumbasierten Sinterteilen diese zunächst mit Hilfe eines Transportsystems T durch einen Entbinderungsbereich, sodann durch einen Sinterbereich und schließlich durch einen Kühlbereich geführt werden. Im Sinterbereich herrscht eine Inertgasatmosphäre, die einen Sauerstoffgehalt aufweist, der einem Taupunkt von höchstens -40°C entspricht. Die Sinterteile werden auf die erforderliche Sintertemperatur von 560 bis 620°C dadurch konvektiv aufgeheizt, dass die Inertgasatmosphäre entsprechend erhitzt und im Kreislauf, die Sinterteile umspülend, geführt wird.

US 5 048 801 A offenbart einen Sinterofen, welcher ein oberes Gehäuse, das ein gasdurchlässiges isolierendes Gehäuse in seinem Inneren aufweist und mit Heizelementen versehen ist, und ein unteres Gehäuse umfasst, das eine feuerfeste Bodenplatte aufweist, gegen die das isolierende Gehäuse aufliegt.
Das gasdurchlässige isolierende Gehäuse besteht dabei aus einem perforiertes Material, dass hinsichtlich der Öffnungen so dimensioniert ist, dass ein Gasfluss erfolgen kann, wobei die perforierte Haube so über der Bodenplatte angeordnet ist, dass kein geschlossenes System ausgebildet ist.

Diese technische Lösung gemäß der Offenbarung der US 5 048 801 A ermöglicht, dass Spülgas, welches in das Innere des oberen Gehäuses eingeführt wird, durch das gasdurchlässige isolierende Gehäuse strömt und dabei organischen Verbindungen des Sinterprozesses abführt, in dem das mit organischen Verbindungen beladene Spülgas aktiv aus dem Ofen abgezogen wird.

Die Aufgabe der vorliegenden Erfindung ist es, eine Vorrichtung und ein Verfahren anzugeben, welche den Entbinderungs- und Sinterprozess vereinfachen und eine definierte Führung von Verunreinigungen, Abgasen, Prozessgasen od. dgl. während des Entbinderns und des Sinterns zwischen den Kammern der Ofenanlage ermöglichen.

Diese Aufgabe wird durch ein Verfahren nach Anspruch 1 bzw. durch eine Vorrichtung nach Anspruch 4 gelöst.
Ein wesentlicher Grundgedanke der Erfindung ist es, das Entbindern und das Sintern der Formteile miteinander zu kombinieren. Hierzu werden beide Prozesse hintereinander in einer gemeinsamen Ofenanlage ausgeführt. Mit anderen Worten erfolgt ein integrierter Entbinderungs- und Sinterprozess, wobei für beide Teilprozesse eine durchgängige Verfahrensweise in einer Anlage zur Anwendung kommt. Ermöglicht wird dies erfindungsgemäß durch den Einsatz eines Gradienten-Verfahrens, also das Anlegen eines definiert gerichteten Temperaturgradienten, wodurch eine definierte Führung von Verunreinigungen, Abgasen, Prozessgasen od. dgl. während des Entbinderns und des Sinterns zwischen den Kammern der Ofenanlage ermöglicht wird.
Die Erfindung trägt der Tatsache Rechnung, dass die Gasführung in den beiden Teilprozessen sehr unterschiedlich ist, da bei der Entbinderung große Abgasmengen entstehen, wohingegen beim Sintern nur ein leichter Atmosphärenwechsel oder sogar Vakuum benötigt wird. Die durch das Anlegen eines definiert gerichteten Temperaturgradienten mögliche Gasführung erlaubt das rückstandsfreie Austreiben von Bindemitteln sowie das Sintern in reiner Atmosphäre, wodurch beide Teilprozesse in einer einzigen Ofenanlage ausgeführt werden können. Mit anderen Worten erfolgt aufgrund des Temperaturgradienten ein gerichteter Wärmestrom zwischen den Kammern der Ofenanlage, welcher ein langsames Durchtreten (Diffusion) der Prozessgase, -abgase od. dgl. einschließlich der von diesen mitgeführten Verunreinigungen oder Spülgase durch die Abtrennungen der Kammern in die gewünschte Richtung bewirkt. In Abhängigkeit von den Prozessparametern kann somit das Übertreten von Gasen von einer Kammer in die andere gefördert oder verhindert werden.
Besonders vorteilhaft ist es, wenn durch Einleiten eines Spül- oder Prozessgases ein zusätzlicher Gasfluss erzeugt wird, der Verunreinigungen der Isolierungen bzw. der Kammern entgegenwirkt. Durch das erfindungsgemäße Verfahren werden Nachteile herkömmlicher Vorgehensweisen, insbesondere Kontaminationen der Werkstücke, vermieden, beispielsweise durch Reduktion des Kohlenstoffgehaltes. Zum anderen verringern sich die Kosten der erforderlichen Ofenanlagen, da nur eine Anlage für beide Prozesse notwendig ist. Durch die Kombination beider Prozesse ohne Herunterfahren und Neuaufheizen kommt es im Vergleich zu herkömmlichen Verfahren zu einer wesentlichen Zeit- und Kostenersparnis.
Durch den Wegfall eines separaten Prozessschrittes ergibt sich im Vergleich zu herkömmlichen Verfahren eine Vielzahl von verfahrenstechnische Möglichkeiten. Insbesondere können Ofenatmosphäre und Temperatur mit dem vorliegenden Verfahren in weiten Arbeitsbereichen variiert werden.
Durch die Möglichkeit der Selbstreinigung des Heißbereiches bei jeder Ofenfahrt, sowie die weitere Möglichkeit eines Reinigungsbrandes an Luft oder im Vakuum können Verunreinigung des Ofens zudem nachhaltig verhindert werden.
Die für die Durchführung des Verfahrens vorgesehene Ofenanlage ist für einen großen Temperaturbereich und verschiedenste Ofenatmosphären ausgelegt. Sowohl das Entbindern als auch das Sintern können erfindungsgemäß unter inerter, oxidierender oder reduzierender Atmosphäre oder aber im Vakuum stattfinden.
Mit der erfindungsgemäßen Ofenanlage wird ein "Ofen-im-Ofen-Prinzip" verwirklicht. Dabei sind die neuartige Heizeranordnung und das neuartige Isolationssystem von Bedeutung.

An die Isolation werden dabei vergleichbare Anforderungen gestellt wie an die Heizelemente in der Arbeitskammer. Da sich eine gute Beständigkeit bei hohen Temperaturen an Luft, wie sie beispielsweise für Reinigungsbrände notwendig ist, und die Beständigkeit unter reduzierender Atmosphäre bei hohen Temperaturen häufig ausschließen, werden vorzugsweise keine herkömmlichen Isolationen, also beispielsweise Strahlschutzisolationen aus Molybdänblech oder Graphitisolationen verwendet, welche ohnehin nur bis ca. 400 °C an Luft einsetzbar sind. Stattdessen werden in einer bevorzugten Ausführungsform der Erfindung Isolationen auf Aluminiumoxidbasis, beispielsweise Keramikfasern, Feuerleichtsteine, Hohlkugelstrukturen oder Isolierbetone eingesetzt, welche den vorliegenden Anforderungen genügen. Besonders vorteilhaft ist es dabei, wenn die verwendeten Isolationen gleichzeitig als für Gase durchlässige Trennelemente zwischen den verschiedenen Kammern ausgeführt sind, zwischen denen der Temperaturgradient anliegt. Der quasi gasdichte innere Behälter, in dem die eigentlichen Entbinderungs- und Sinterprozesse stattfinden, kann hierzu betriebsbedingte Öffnungen, beispielsweise Thermoelement- oder Heizelement-Durchführungen aufweisen.
Durch robuste und günstige Heizelemente und Isolationssysteme im Hochtemperaturbereich sowie durch eine einfachere Ansteuerung der Heizelemente können mit der erfindungsgemäßen Ofenanlage im Vergleich zu herkömmlichen Systemen Anschaffungs- und Betriebskosten gesenkt werden.
Zusammengefasst erlaubt der integrierte Sinter- und Entbinderungsofen bzw. das erfindungsgemäße Verfahren eine durchgehende Betriebsweise und das vollständige Austreiben des Binders, reduziert damit die Verunreinigungen wie Restkohlenstoffe und gewährleistet eine Selbstreinigung der Anlage. Niedrigere Investitionskosten, geringere Betriebskosten, verkürzte Prozesszeiten sowie neue verfahrenstechnische Möglichkeiten sind hierbei die wesentlichen Vorteile.
Weitere Vorteile, Besonderheiten und zweckmäßige Weiterbildungen der Erfindung ergeben sich aus den Unteransprüchen oder deren Unterkombinationen.

Die Erfindung wird nachstehend an Hand der Zeichnungen und der Ausführungsbeispiele näher erläutert. Es zeigen:

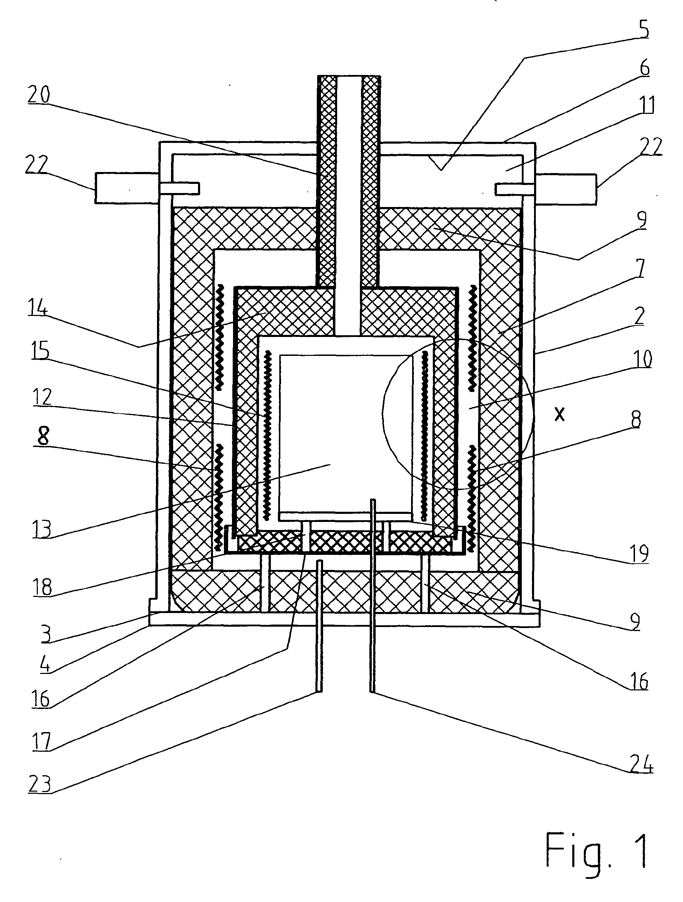

- Fig. 1:: eine stark vereinfachte schematische Darstellung der Ofenanlage gemäß der Erfindung,
- Fig. 2:: eine Detailansicht mit schematischer Darstellung der Diffusion zwischen den Kammern.

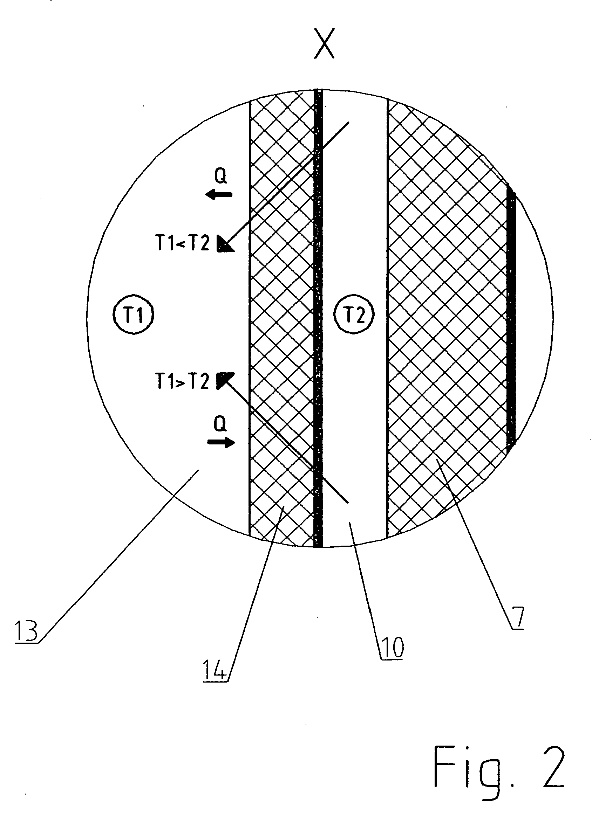

Die unter Wasserstoffatmosphäre betriebene Ofenanlage 1 zum integrierten Entbindern und Sintern umfasst einen gasdichten, wassergekühlten, im Querschnitt runden Außenbehälter 2 aus Edelstahl. Selbstverständlich können stattdessen auch andere Behälterformen und Kühlungsarten verwendet werden. An der Unterseite 3 des Außenbehälters 2 befindet sich ein wassergekühlter Deckel 4, der sich mechanisch bewegen lässt. Hierdurch ist ein komfortables Bestücken der Ofenanlage 1 möglich. Die obere Öffnung 5 des Außenbehälters 2 ist ebenfalls durch einen solchen Deckel 6 verschlossen. Er dient Montage- und Revisionszwecken und ist abnehmbar.
Der Mantel des Außenbehälters 2 ist mit einer speziellen Keramikisolierung 7 ausgekleidet, die bis ca. 1100°C wasserstoffbeständig ist. Sie dient gleichzeitig als Träger der darauf befindlichen äußeren Heizelemente 8, welche vorzugsweise aus einer FeCrAl-Legierung bestehen. Die äußeren Heizelemente 8 sind dabei durch herkömmliche Befestigungsmittel, also beispielsweise mittels einer Aufhängung, an der Keramikisolierung 7 angebracht. Durch zwei stirnseitige Isolierplatten 9 aus gleichem Isoliermaterial entsteht ein geschlossener, zylindrischer äußerer Arbeitsraum, der im Folgenden als Heizkammer 10 bezeichnet wird. Über der Heizkammer 10 ist ein nicht isolierter Anschlussraum 11 vorgesehen.
In der Heizkammer 10 befindet sich ein zweiter, einwandiger Innenbehälter 12 aus hochtemperaturbeständigem Stahl. Er ist im Anschlussraum 11 aufgehangen, wobei aus Gründen der Übersichtlichkeit die Aufhängung nicht abgebildet ist.
Im Inneren ist der Innenbehälter 12 ebenfalls mit keramischer Isolierung 14 isoliert. Dadurch wird der eigentlich innere Arbeitsraum gebildet, der nachfolgend als Arbeitskammer 13 bezeichnet wird. Die hierbei verwendeten Isolierungsformteile weisen einen hohen Anteil an möglichst reinem Al₂O₃ auf und zeigen im Vergleich zu herkömmlichen Isolierungen eine erhöhte Resistenz gegenüber korrosiven und reduzierenden Atmosphären (H₂, CO). Der Innenbehälter 12 weist Thermoelement- und Heizelement-Durchführungen (nicht abgebildet) auf, durch welche im Betriebszustand ein Fluss von Abgasen od. dgl. zwischen den Kammern 10, 13 erfolgen kann.
Aus dem Anschlussraum 11 und durch die Isolationen 9, 14 des Außenbehälters 2 und des Innenbehälters 12 hindurch hängen mehrere, beispielsweise sechs innere Heizelemente 15 in die Arbeitskammer 13 hinein. Die Aufhängung ist dabei wiederum aus Gründen der Übersichtlichkeit nicht dargestellt. Die inneren Heizelemente 15 sind dabei derart in der Arbeitskammer 13 angeordnet, dass sie sich in der Nähe der Mantelfläche befinden, so dass das Innere der Arbeitskammer 13 für die zu behandelnden Formteile frei bleibt.
Der Innenbehälter 12 wird an der unteren Stirnseite mittels eines flachen, ebenfalls isolierten Deckels 17 verschlossen. Dieser ist über Befestigungselemente 16 fest mit dem Deckel 4 des Außenbehälters 2 verbunden, so dass beim Öffnen der Anlage 1 freier Zugang zur Arbeitskammer 13 besteht. Am unteren Deckel 17 befindet sich eine Aufnahme 18, die es erlaubt, einen Chargenträger 19 zu installieren. Am oberen Ende des Innenbehälters 12 befindet sich ein isoliertes Abgasrohr 20, welches die im Prozess entstehenden bzw. verwendeten Gase ableitet.
Vorzugsweise wird eine reduzierende Ofenatmosphäre verwendet. Die Ofenanlage 1 ist jedoch konstruktiv derart ausgelegt, dass ein Betrieb unter Luft, im Vakuum, unter Inertgas (N₂, Ar) oder mit trockenem Wasserstoff bis ca. 1.500 °C möglich ist.
Die in der Anlage verwendeten Heizelemente 8, 15 werden über Stromzuführungen 22 am Außenmantel des Außenbehälters 2 im Anschlussraum 11 angeschlossen. Die Regelung der inneren und äußeren Heizelemente erfolgt unabhängig voneinander durch eine außerhalb der Ofenanlage 1 angeordnete Ofensteuerung (nicht abgebildet).
Durch die Verwendung von speziellen Heizelementen 15 auf Basis von SiC oder MoSi₂ als innere Heizelemente in der Arbeitskammer 13 ist ein Einsatz bei Temperaturen bis 1600°C in trockener reduzierender bis hin zu oxidierender Atmosphäre möglich. Die verwendeten Heizelemente können direkt in der Ofenatmosphäre eingesetzt werden, so dass eine vereinfachte Ofenkonstruktion, wie im Ausführungsbeispiel skizziert, möglich ist. Hieraus ergeben sich geringere Kosten nicht nur in der Konstruktion sondern auch in der Instandhaltung. Bekannte Heizelemente für das Entbindern und Sintern weisen auf Grund Ihrer Zusammensetzung Nachteile in Bezug auf ihre Einsetzbarkeit in einem breiten Temperaturbereich sowie bei unterschiedlichen Ofenatmosphären auf.
Nachfolgend wird der Verfahrensablauf zum Betrieb der Ofenanlage 1 beschrieben. Nach dem Öffnen der Ofenanlage 1 werden die Formteile (Grünling) auf dem Chargenträger 19 platziert. Anschließend wird die Ofenanlage 1 geschlossen. Zum Aufheizen der Ofenanlage 1 werden die äußeren und inneren Heizelemente 8, 15 eingeschaltet. Das Aufheizen erfolgt bis zur benötigten Entbinderungstemperatur in der Arbeitskammer 13. Hierbei werden die äußeren Heizelemente 8 so gefahren, dass sich ein Temperaturgradient von der Heizkammer 10 zu der Arbeitskammer 13, also vom äußeren zum inneren Arbeitsraum über die Isolation einstellt.
Die Temperatur in der Heizkammer 10 ist dabei höher als die in der Arbeitskammer 13. Dadurch entstehen ein Temperaturgradient und ein Wärmestrom, der einer Diffusion von Verunreinigungen wie z. B. Entbinderungsgasen entgegenwirkt. Auf Grund des Gradienten kommt es zu Diffusion in Richtung der niedrigeren Temperatur, also von außen nach innen. Dies ist schematisch in der oberen Bildhälfte von Fig. 2 gezeigt. Dadurch wird verhindert, dass der aus dem Formteil austretende Binder in der Isolation 14 angesammelt wird. Er verlässt den Innenbehälter 12 über die isolierte Abgasstrecke 20 und kann nachfolgend an geeigneter Stelle entsorgt bzw. gesammelt werden. Vorteilhafterweise wird zusätzlich ein Spülgas in die Heizkammer 10 geleitet, welches über ungenügend gedichtete Stellen, beispielsweise Thermoelementanschlüsse, in die Arbeitskammer 13 strömt und ebenfalls einem Austritt der Abgase in die Isolation 14 bzw. die Heizkammer 10 entgegenwirkt. Hierfür ist ein Spülgasanschluss 23 in der Heizkammer vorgesehen. Das Spülgas tritt bei Betriebstemperatur auch über temperaturbedingte Spalte zwischen Innenbehälter 12 und Deckel 17 durch die Isolierung 14 in die Arbeitskammer 13 ein.
Die Entbinderungstemperatur wird so lange gehalten, bis das Formteil vollständig entbindert ist. Der Temperaturgradient wird dabei aufrechterhalten. Durch ein derartiges Temperaturregime wird eine Verunreinigung der Isolierung und des Austreten der Abgase aus der Arbeitskammer 13 verhindert. Diese Vorgehensweise kann bis zu Temperaturen von ca. 900 °C beibehalten werden, womit eine signifikante Erhöhung der Entbinderungstemperaturen erreicht wird. Der Entbinderungsvorgang erfolgt vorzugsweise unter inerter Atmosphäre bei Temperaturen von ca. 100°C bis 600°C. Es kann jedoch auch unter oxidierender oder reduzierender Atmosphäre oder im Vakuum entbindert werden. Das inerte Entbindern wird dabei insbesondere bei sauerstoffempfindlichen Bauteilen durchgeführt.
Auf Grund der Konstruktion der Ofenanlage 1 kann sich unmittelbar an den Entbinderungsvorgang das Sintern des Formteils (Braunling) anschließen. Das Formteil verbleibt dabei in der Arbeitskammer 13. Die Ofenanlage 1 muss nicht abgekühlt werden. Je nach Anforderung erfolgt nun eine Inertisierung der Ofenanlage 1, um gegebenenfalls O₂-Freiheit herzustellen. Für den anschließenden Sinterprozess wird die Arbeitskammer 13 mittels der inneren Heizelemente 15 auf Sintertemperatur erwärmt. Nach Erreichen der Sintertemperatur, zumeist zwischen 1000°C und 1500°C, erfolgt ein Halten der Temperatur über einen bestimmten Zeitraum, der eigentliche Sintervorgang findet statt. Während des Aufheizens und des Sintervorganges strömt reines Prozessgas, beispielsweise Wasserstoff oder Inertgas, in die Arbeitskammer 13 um die zu sinternden Formteile und aus dieser durch betriebsbedingte Öffnungen in die Heizkammer 10. Ein Ausströmen erfolgt ebenso über temperaturbedingte Spalte zwischen Innenbehälter 12 und Deckel 17.
Durch diese Strömung des Gases in Richtung Heizkammer 10 wird einer Verunreinigung der Arbeitskammer 13 entgegengewirkt. Die Arbeitskammer weist hierzu einen entsprechenden Prozessgasanschluss 24 auf.
In der Heizkammer 10 werden die äußeren Heizelemente 8 auf einer Temperatur von vorzugsweise unterhalb 1100 °C gehalten. Dadurch entsteht wiederum ein Temperaturgradient, welcher der Diffusion von Verunreinigungen in die Arbeitskammer 13 entgegenwirkt. Dies ist schematisch in der unteren Bildhälfte von Fig. 2 gezeigt. In der Heizkammer 10 ist wenigstens ein Gasauslass, insbesondere in Form eines Überstromventils, zum Ablassen der Abgase od. dgl. aus der Kammer vorgesehen.
Nachdem der Sintervorgang beendet ist, werden die äußeren und inneren Heizelemente 8, 15 ausgeschaltet, der Ofen kühlt langsam auf Umgebungstemperatur ab. Nach Erreichen der Entnahmetemperatur kann der Ofen geöffnet und die Bauteile entnommen werden. Danach steht der Ofen unmittelbar für einen neuen Prozess zur Verfügung und kann mit neuen Grünlingen bestückt werden.
Für den Fall der Ablagerung von Oxidationsprodukten in der Ofenanlage ist es möglich, diese so zu betreiben, dass mittels eines Leerbrandes an Luft oder im Vakuum eine Reinigung erfolgt.
Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1: - Ofenanlage
- 2: - Außenbehälter
- 3: - Unterseite
- 4: - unterer Behälterdeckel
- 5: - Öffnung
- 6: - oberer Behälterdeckel
- 7: - äußere Isolierung
- 8: - äußeres Heizelement
- 9: - stirnseitige Isolierung
- 10: - Heizkammer
- 11: - Anschlussraum
- 12: - Innenbehälter
- 13: - Arbeitskammer
- 14: - innere Isolierung
- 15: - inneres Heizelement
- 16: - Befestigungselement
- 17: - Deckel
- 18: - Aufnahme
- 19: - Chargenträger
- 20: - Abgasrohr
- 21: - Isolierung
- 22: - Stromzuführung
- 23: - Spülgasanschluss
- 24: - Prozessgasanschluss

## Patentansprüche

1. Verfahren zum kombinierten Entbindern und Sintern von Formteilen in einer wenigstens zwei Kammern (10, 13) aufweisenden Ofenanlage (1) nach dem Ofen-im-Ofen-Prinzip mit einer definierten Führung von Spülgasen, Verunreinigungen, Aus- und Abdampfungen durch Anlegen eines definiert gerichteten Temperaturgradienten zwischen den Kammern (10, 13) **dadurch gekennzeichnet, dass** es folgende Schritte umfasst:
- Zuführen der Formteile in eine Arbeitskammer (13), an welche eine Heizkammer (10) angrenzt, wobei im Betriebszustand eine durch den Temperaturgradienten bewirkte Gasdiffusion zwischen den Kammern möglich ist,
- Einstellen einer Entbinderungstemperatur in der Arbeitskammer (13) und einer Temperatur höher als die Entbinderungstemperatur in der Heizkammer (10) zur Einstellung einer Gasdiffusion in Richtung Arbeitskammer (13),
- Abführen des Verunreinigungen, Aus- und Abdampfungen mitführenden Spülgases aus der Arbeitskammer (13) über eine Abgasstrecke (20),
- Einstellen einer Sintertemperatur in der Arbeitskammer (13) und einer Temperatur niedriger als die Sintertemperatur in der Heizkammer (10) zur Einstellung einer Gasdiffusion in Richtung Heizkammer (10),
- Entnehmen der Formteile aus der Arbeitskammer (13).

2. Verfahren gemäß Anspruch 1, mit dem Schritt Zuführen von Spülgas in die Heizkammer (10) während des Entbinderungsprozesses zur Einstellung eines zusätzlichen Gasflusses in Richtung Arbeitskammer (13).

3. Verfahren gemäß Anspruch 1, mit dem Schritt Zuführen von Prozessgas in die Arbeitskammer (13) während des Sinterprozesses zur Einstellung eines zusätzlichen Gasflusses in Richtung Heizkammer (10).

4. Ofenanlage (1) nach dem Ofen-im-Ofen-Prinzip zur Durchführung des Verfahrens nach einem der Ansprüche 1 bis 3, aufweisend eine Arbeitskammer (13) mit einer Abgasstrecke (20), eine an die Arbeitskammer (13) angrenzende Heizkammer (10), wobei die Arbeitskammer (13) von der Heizkammer (10) umschlossen ist, ein Isolierelement (14) zur Wärmeisolierung von Arbeitskammer (13) und Heizkammer (10) sowie wenigstens ein in der Arbeitskammer (13) angeordnetes erstes Heizelement (15) und wenigstens ein in der Heizkammer (10) angeordnetes zweites Heizelement (8), wobei das erste und das zweite Heizelement getrennt voneinander regelbar sind, **dadurch gekennzeichnet, dass** der die Arbeitskammer (13) umgebende Innenbehälter (12) im Betriebszustand ein bis auf betriebsbedingte Öffnungen gasdiches, geschlossenes System ist, welches über Befestigungselemente (16) mit dem Deckel (4) des die Heizkammer (10) umgebenden Außenbehälters (2) in Verbindung steht, zwischen dem Innenbehälter (12) und der Arbeitskammer (13) eine innere Isolierung (14) sowie zwischen dem Außenbehälter (2) und der Heizkammer (10) eine äußere Isolierung (7) angeordnet ist und ein Spülgasanschluss (23) in die Heizkammer (10) sowie ein Prozessgasanschluss (24) in die Arbeitskammer (13) führt.

5. Ofenanlage (1) nach dem Ofen-im-Ofen-Prinzip gemäß Anspruch 4, **dadurch gekennzeichnet, dass** die Isolierung (7 und 14) aus auf Aluminiumoxid basierenden Keramikfasern, Feuerleichtstein oder Isolierbeton besteht.

6. Ofenanlage (1) gemäß Anspruch 4, **dadurch gekennzeichnet, dass** sich an der Unterseite (3) des Außenbehälters (2) ein wassergekühlter Deckel (4) befindet, der sich mechanisch bewegen lässt und sich an der oberen Öffnung (5) des Außenbehälters (2) ein abnehmbarer Deckel (6) befindet, welcher den Außenbehälter (2) verschließt.

7. Ofenanlage (1) nach dem Ofen-im-Ofen-Prinzip gemäß Anspruch 4, **dadurch gekennzeichnet, dass** die Isolierung (7) oder der Innenbehälter (12) äußere Heizelemente (8) trägt.

8. Ofenanlage (1) nach dem Ofen-im-Ofen-Prinzip gemäß Anspruch 4, **dadurch gekennzeichnet, dass** der Innenbehälter (12) einwandig ist, welcher an seiner unteren Stirnseite mit einem isoliertem Deckel (14) verschlossen ist und aus hochtemperaturbeständigem Stahl besteht, wobei sich am oberen Ende des Innenbehälters (12) ein Abgasrohr (20) befindet, über das Gase ableitbar sind.

## Claims

1. Method for the combined debinding and sintering of moulded components in a furnace installation (1) consisting of at least two chambers (10, 13) designed according to the furnace-in-furnace-principle with a defined transmission of purge gases and contaminants, substance evaporation and exhaust gases by applying a selectively defined temperature gradient between the chambers (10, 13), wherein this method comprises the following steps:
- feeding the moulded components in a working chamber (13) which borders on a heating chamber (10), and in operating condition a gas diffusion caused by the temperature gradient is possible between the chambers,
- setting a debinding temperature in the working chamber (13) and a temperature higher than the debinding temperature in the heating chamber (10) for adjusting a gas diffusion towards the working chamber (13),
- discharging the purge gas, which contains contaminants, substance evaporation and exhaust gases, out of the working chamber (13) via an exhaust gas pipe (20),
- setting a sintering temperature in the working chamber (13) and a temperature lower than the sintering temperature in the heating chamber (10) for adjusting a gas diffusion towards the heating chamber (10),
- taking the moulded components out of the working chamber (13).

2. Method as set forth in claim 1 added by the step of charging purge gas into the heating chamber (10) during the debinding process for adjusting an additional gas flow towards the working chamber (13).

3. Method as set forth in claim 1 added by the step of charging process gas into the working chamber (13) during the sintering process for adjusting an additional gas flow towards the heating chamber (10).

4. Furnace installation (1) according to the furnace-in-furnace principle to carry out the method as set forth in claims 1 through 3, comprising a working chamber (13) with an exhaust gas pipe (20), a heating chamber (10) bordering to the working chamber (13) with the working chamber (13) being enclosed by the heating chamber (10), an insulation element (14) for the thermal insulation of the working chamber (13) and the heating chamber (10) as well as at least one first heating element (15) installed in the working chamber (13) and at least one second heating element (8) installed in the heating chamber (10), and the two heating elements can be controlled separately from each other, wherein the inner container (12) surrounding the working chamber (13) is a gastight, closed system in operating mode if it is not opened for operational purposes and is connected via fasteners (16) with the cover (4) of the outer container (2) surrounding the heating chamber (10), an inner insulation (14) is provided between the inner container (12) and the working chamber (13) and an outer insulation (7) is provided between the outer container (2) and the heating chamber (10), and a purge gas connection (23) leads into the heating chamber (10) and a process gas connection (24) leads into the working chamber (13).

5. Furnace installation (1) according to the furnace-in-furnace-principle as set forth in claim 4, wherein the insulation (7 and 14) is made of ceramic fibres based on aluminium oxide, insulating refractory brick or insulating concrete.

6. Furnace installation (1) as set forth in claim 4, wherein the bottom side (3) of the outer container (2) is provided with a water-cooled cover (4), which can be moved mechanically, and the top opening (5) of the outer container (2) is provided with a removable cover (6), which closes the outer container (2).

7. Furnace installation (1) according to the furnace-in-furnace-principle as set forth in claim 4, wherein the insulation (7) or the inner container (12) is equipped with outer heating elements (8).

8. Furnace installation (1) according to the furnace-in-furnace-principle as set forth in claim 4, wherein the inner container (12) is single-walled, is closed by an insulated cover (14) at its bottom front face and is made of high-temperature resistant steel, and an exhaust gas pipe (20) for discharging gases is installed at the upper end of the inner container (12).

## Revendications

1. Procédé pour l'élimination du liant et le frittage des pièces préfabriquées dans un système de four (1) qui se compose au moins de deux chambres (10, 13) suivant le principe "four dans four" avec guidage défini des gaz de purge, impuretés, évaporations des substances et gaz d'échappement en appliquant un gradient de température défini sélectivement entre les chambres (10, 13) est **caractérisé en ce qu'**il comprend les étapes suivantes:
- Fourniture des pièces préfabriquées dans une chambre de travail (13) adjacent à une chambre de chauffage (10), et en état de service une diffusion de gaz, causée par le gradient de température, est possible entre les chambres,
- Réglage d'une température pour l'élimination du liant dans la chambre de travail (13) et d'une température plus haute que la température pour l'élimination du liant dans la chambre de chauffage (10) pour initier la diffusion de gaz dans la direction de la chambre de travail (13),
- Évacuation des gaz de purge contenant des impuretés, évaporations des substances et gaz d'échappement de la chambre de travail (13) par un conduit des gaz d'échappement (20),
- Réglage d'une température de frittage dans la chambre de travail (13) et d'une température plus basse que la température de frittage dans la chambre de chauffage (10) pour initier la diffusion de gaz dans la direction de la chambre de chauffage (10),
- Enlèvement des pièces préfabriquées de la chambre de travail (13).

2. Procédé suivant la revendication 1 contenant l'étape pour fournir le gaz de purge dans la chambre de chauffage (10) durant le procédé d'élimination du liant pour initier un courant gazeux supplémentaire dans la direction de la chambre de travail (13).

3. Procédé suivant la revendication 1 contenant l'étape pour fournir le gaz de procédé dans la chambre de travail (13) durant le procédé de frittage pour initier un courant gazeux supplémentaire dans la direction de la chambre de chauffage (10).

4. Système de four (1) suivant le principe "four dans four" pour la réalisation du procédé suivant une ou plusieurs des revendications 1 à 3, comprenant une chambre de travail (13) avec un conduit des gaz d'échappement (20), une chambre de chauffage (10) adjacent à la chambre de travail (13), la chambre de travail (13) étant entouré de la chambre de chauffage, un élément d'isolation (14) pour l'isolation thermique de la chambre de travail (13) et la chambre de chauffage (10) et au moins un premier élément de chauffage (15) situé dans la chambre de travail (13) et au moins un deuxième élément de chauffage (8) situé dans la chambre de chauffage (10), et le premier et le deuxième élément de chauffage étant réglables séparément, est **caractérisé en ce qu'**en état de service le récipient intérieur (12) est un système fermé, étanche au gas sauf une ou deux ouvertures opérationnelles et est lié par des éléments de fixation (16) au couvercle (4) du récipient extérieur (2) entourant la chambre de chauffage (10), une isolation intérieure est prévue entre le récipient intérieur (12) et la chambre de travail (13) et une une isolation extérieure (7) est prévue entre le récipient extérieur (2) et la chambre de chauffage (10) et un raccord de gaz de purge (23) fournit le gaz dans la chambre de chauffage (10) et un raccord de gaz de procédé (24) fournit le gaz dans la chambre de travail (13).

5. Système de four (1) suivant le principe "four dans four" suivant la revendication 4 est **caractérisé en ce que** l'isolation (7 et 14) se compose des fibres céramiques, briques légères réfractaires ou béton isolant sur la base d'alumine.

6. Système de four (1) suivant la revendication 4 est **caractérisé en ce qu'**un couvercle refroidi par eau (4) se trouve sur la face inférieure (3) du récipient extérieur (2), qui peut être bougé mécaniquement, et un couvercle amovible (6) se trouve sur l'ouverture supérieure (5) du récipient extérieur (2) pour fermer le récipient extérieur (2).

7. Système de four (1) suivant le principe "four dans four" suivant la revendication 4 est **caractérisé en ce que** l'isolation (7) ou le récipient inférieur (12) est muni des éléments de chauffage extérieurs (8).

8. Système de four (1) suivant le principe "four dans four" suivant la revendication 4 est **caractérisé en ce que** le récipient intérieur (12) est à simple paroi, fermé par un couvercle isolé (14) sur sa face frontale inférieure et se compose d'acier à haute résistance thermique, et est muni d'un conduit de gaz d'échappement à l'extrémité supérieure du récipient intérieur (12) pour évacuer des gaz.
